# EUROPEAN PATENT SPECIFICATION

(11) **EP 2 732 258 B1**
(45) Date of publication and mention of the grant of the patent: **01.08.2018**
(21) Application number: 12734935.5
(22) Date of filing: 10.07.2012
(51) Int. Cl.: G01M 5/00

(54) **MONITORING SYSTEM FOR DAMAGE TO STRUCTURES AND BUILDINGS**
ÜBERWACHUNGSSYSTEM FÜR SCHÄDEN AN STRUKTUREN UND GEBÄUDEN
SYSTÈME DE SURVEILLANCE DES DOMMAGES CAUSÉS À DES STRUCTURES ET À DES BÂTIMENTS

(30) Priority: 12.07.2011 IT VR20110144
(43) Date of publication of application: 21.05.2014
(73) Proprietor: THUR S.R.L., 37122 Verona (IT)
(72) Inventor: BIRTELE, Andrea, I-37138 Verona (IT)
(74) Representative: Modiano, Micaela Nadia
(86) International application number: PCT/EP2012/063475
(87) International publication number: WO 2013/007721

(56) References cited:
- WO-A1-2006/120435
- FR-A1- 2 931 545
- US-A- 5 430 953

## Description

The present invention relates to a monitoring system for damage to structures and buildings.

As is known, the monitoring of damage to masonry systems and structural elements in general makes it possible to establish the evolution of the relative displacements of the structures over time, i.e., the differential failures of the foundation structures, as a direct consequence of exceeding the strength limit tolerated by the masonry.

The simplest background art for monitoring the relative displacements of damaged masonry is performed by rigidly connecting a glass element so as to straddle the damage; any displacements entail breaking the glass element, indicating that the zones of the structure have moved.

One drawback of this technique is the fact that the background art does not provide information regarding the extent of the displacement. A further drawback resides in the fact that the known monitoring system cannot be used once the condition of breakage of the glass element has been reached.

A known alternative to the described monitoring system consists in using monitoring systems, called crackmeters, composed of two distinct elements to be connected rigidly to the masonry, at a damaged area, each one on a zone of said damaged area; one element bears an imprinted millimeter grid along two mutually perpendicular directions which lie on the masonry plane and on the other element there is a crosshair that allows the detection and quantification of the displacements. One drawback of this known background art is the need to read the displacements manually. A further drawback is the possibility of making mistakes in reading the displacements.

A known alternative to the two monitoring systems described above consists in using electronic crackmeters constituted by a single-axis mechanical potentiometric transducer connected to a control unit for automatic data reading and acquisition. Even these known systems are not free from drawbacks, including the need for professional installation, the limitation in detecting displacement exclusively along a single direction, the high cost, the wired connection between the transducer and the data reading and acquisition control unit and the significant size of this monitoring system.

The document FR2931545-A1 discloses a single-axis crackmeter.

The document US 5,430,953 discloses a crackmeter measuring a displacement along a first axis and two rotations around two axis perpendicular to the first axis.

The document WO 2006/120435-A1 discloses a crackmeter measuring displacements in two perpendicular directions using an inductance based sensing arrangement. The aim of the present invention is to eliminate the drawbacks illustrated above in known types of systems for monitoring cracks by devising a system that allows automatic and accurate monitoring of displacements.

Within this aim, an object of the invention is to provide a system that allows detection of displacements along a plurality of directions at right angles to each other, with high precision, merely by way of example even higher than 0.5 mm.

Another object of the invention is to provide a system that is easy to apply both outdoors and indoors.

A further object of the invention is to provide a crack monitoring system that ensures a long operating life and the possibility of sending warning messages in case of excessive displacements or malfunction.

Yet another object of the invention is to provide a system that makes it possible to program the reading and acquisition of displacement data as well as their filing or forwarding to adapted Web sites, which can be consulted directly by the user remotely.

An object of the invention is, moreover, to provide a system provided with a variable range of measurement of the displacement.

Another object of the invention is to provide a system that has extremely reduced dimensions and a limited aesthetic impact.

A further object of the invention is to devise a system that makes it possible, if a significant increase in the dimensions of the cracks is detected, to continue to monitor the progress of the crack without the need to change the crackmeter as in known systems.

Another object of the present invention is to provide a system that allows a measurement, substantially in the same point of the crack, of the displacement along two substantially perpendicular directions.

This aim and these and other objects that will become more apparent hereinafter are achieved by a monitoring system, particularly for damage to structures and buildings, according to what is provided in the subsequent claim 1.

Further characteristics and advantages of the invention will become more apparent from the description of a preferred but not exclusive embodiment of the monitoring system according to the invention, illustrated by way of non-limiting example in the accompanying drawings, wherein:
Figure 1 is an explanatory diagram of an example of configuration of the monitoring system according to the invention;
Figure 2 is a schematic plan view of the apparatus for measuring cracks that is part of the monitoring system of the present invention;
Figure 3 is a schematic plan view of the apparatus for measuring cracks;
Figure 4 is a partially sectional lateral elevation view of the apparatus illustrated in Figure 3;
Figure 5 is a partially sectional front elevation view of the apparatus illustrated in Figure 3;
Figure 6 is a partially sectional plan view of a constructive variation of the apparatus for measuring cracks between masonry elements arranged mutually at right angles;
Figure 7 is a partially sectional lateral elevation view of the apparatus shown in Figure 6.

In the description that follows, as well as in the drawings, identical reference numerals correspond to identical elements.

With reference to the cited figures, the monitoring system according to the invention, generally designated by the reference numeral 1, comprises at least one apparatus 2a for measuring cracks, which is fixed to a structure 3a to be monitored, and a control server 4.

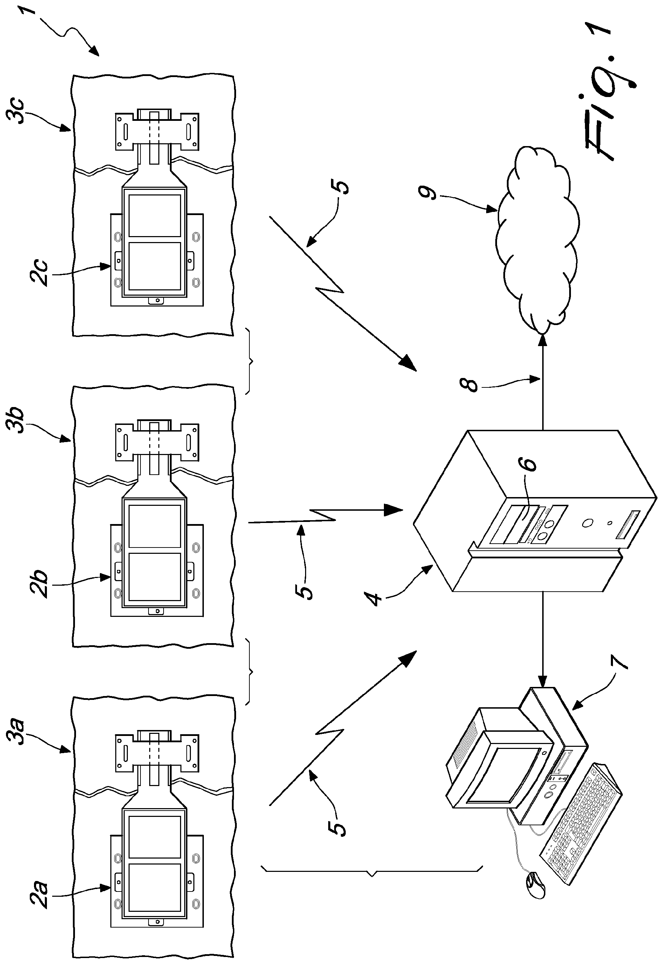

By way of example, Figure 1 illustrates three apparatuses 2a, 2b, 2c, which are fixed to three different structures or portions of structure 3a, 3b, 3c to be monitored. Each apparatus 2a, 2b, 2c has means 5 for communication, for example for wireless communication according to the ZigBee standard, with the control server 4.

The control server 4, which can be supplied with power over the electrical grid or for example by means of solar panels, has a user interface 6 for the management and control of the monitoring system 1.

The control server 4 is provided, moreover, with means for storing data, for example by means of digital memory; these data can be consulted directly by the user, by means of the user interface 6, or downloaded onto a personal computer 7.

The control server 4 also has means 8 for transmitting data, for example by means of the GSM protocol, to a website 9, which can be browsed directly by the user remotely.

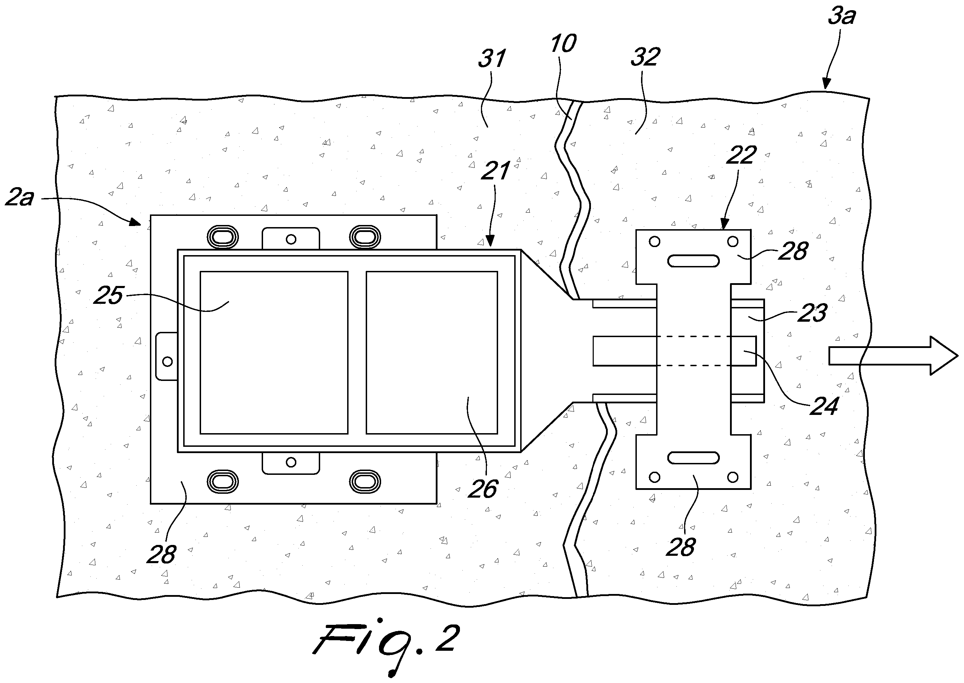

Figure 2 is a view of the apparatus 2a for measuring cracks. Said apparatus 2a is designed to be fixed to a structure 3a of which one wishes to monitor the progress of a crack 10. The crack 10 defines two zones 31 and 32 of the structure 3a to be monitored.

The apparatus 2a comprises a first fixed element 21, which is integral with the zone 31 of the structure 3a, and a second fixed element 22, which is integral with the zone 32 of the structure 3a.

The portion 23 of the first fixed element 21 that engages the second fixed element 22 so as to straddle the crack 10 has a sensor 24 (the sensor is generally designated by the numeral 24; the numeral 241 designates the first potentiometric membrane) for measuring the displacement between the two zones 31 and 32 of the structure 3a.

The first fixed element 21 accommodates an electronic board 25 for acquisition and transmission of data and a battery system 26 for supplying power to the electronic board 25.

The apparatus 2 is provided with plates 28 for fixing to the structure 3a to be monitored.

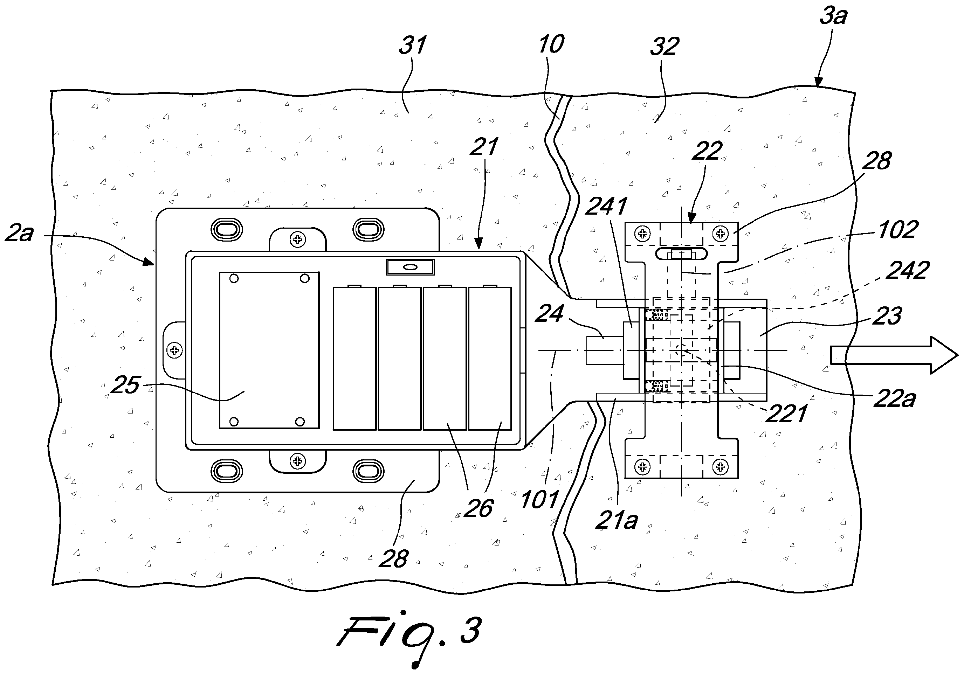

Figure 3 is a schematic view of the portion 23 of the apparatus 2a that contains the sensor 24 for measuring displacement.

The apparatus 2a comprises a first element for detecting displacement along a first detection direction 101 and at least one second element for detecting displacement along a second detection direction 102 substantially at right angles to the first detection direction 101.

The first element for detecting displacement acts between a first abutment region, defined on the first fixed element 21, and a second abutment region supported so that it can rotate about a first pivoting axis 103 by the second fixed element 22, whereas the second detecting element acts between a third abutment region, which is defined on the second fixed element 22, and a fourth abutment region, supported so that it can rotate about a second pivoting axis 104 parallel to the first pivoting axis 103, by the first fixed element 21.

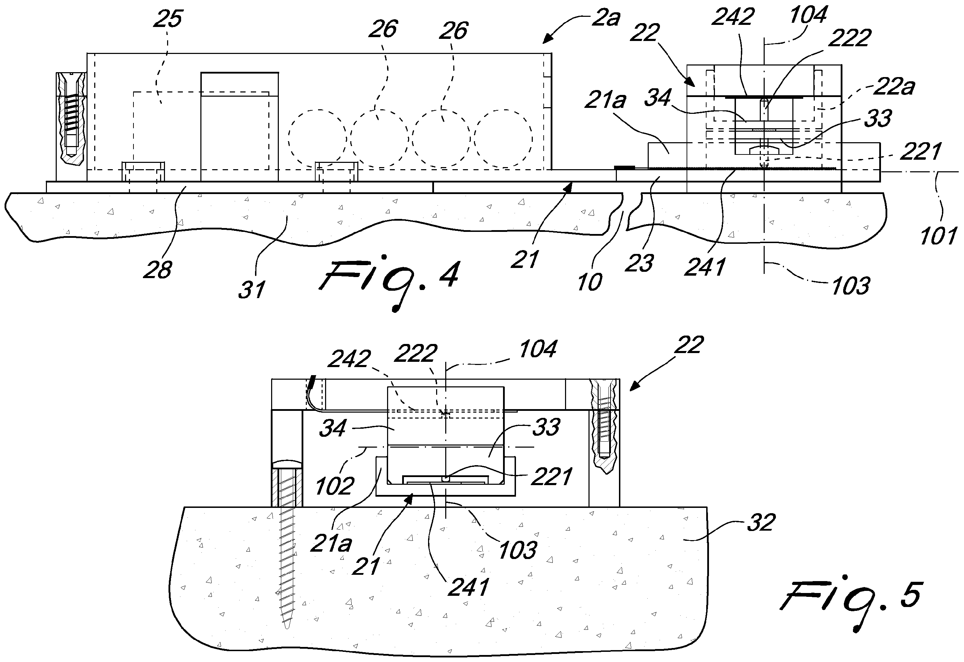

With reference to the embodiments shown in Figures 3 to 7, the first detecting element comprises a first potentiometric membrane 241, which is linear, i.e., extends along the first detection direction 101, supported by the first fixed element 21, and cooperates with a respective first slider 221 that defines the second abutment region.

Advantageously, the second detection element also comprises a second linear potentiometric membrane 242, which is supported by the second fixed element 22 and is arranged at right angles to the first linear potentiometric membrane 241; the second linear potentiometric membrane 242 cooperates with a respective second slider 222 which defines the fourth abutment region.

In particular, the first potentiometric membrane 241 is supported by the first fixed element 21, whereas the respective first slider 221 is supported by the second fixed element 22.

The slider 221 is in electrical and/or mechanical sliding contact with the respective potentiometric membrane 241, but nothing forbids the use of sliders, for example magnetic sliders, which can, despite being kept spaced from the respective potentiometric membrane, cooperate with it, allowing a detection of the mutual displacement along at least one detection direction 101.

Advantageously, the first slider 221 is supported so that it can rotate about a first pivoting axis 103, which is substantially perpendicular to the plane of arrangement of the first potentiometric membrane 241, by the second fixed element and is guided slidingly along a first sliding guide 21a, which is defined on the first fixed element 21 and is substantially parallel to the first detection direction 101.

If the second potentiometric membrane 242 is provided, the second slider 222 is supported, so that it can rotate about a second pivoting axis 104, which is substantially parallel to the first pivoting axis 103, by the first fixed element 21 and is guided slidingly along a second sliding guide 22a, which is defined on the second fixed element 22 and is substantially parallel to the second detection direction 102.

In order to make it possible to detect, in the same point along the crack 10, the displacement along two mutually perpendicular directions, the first linear potentiometric membrane 241 is at least partially superimposed on the second linear potentiometric membrane 242.

Advantageously, in this case the first pivoting axis 103 coincides with the second pivoting axis 104 and respective mutually pivoted supporting blocks 33 and 34 are provided for the first slider 221 and for the second slider 222.

Conveniently, the linear potentiometric membrane 241 is arranged so as to be substantially at right angles to the crack 10, whereas the linear potentiometric membrane 242 is arranged substantially parallel to the crack 10 and in any case at right angles to the membrane 241.

Depending on the extent of the displacements expected between the zones 31 and 32 of the structure, the invention provides for the possibility of inserting linear potentiometric membranes 241 and 242 of different lengths. In this manner it is possible to modify, for example increase, the displacement measurement range.

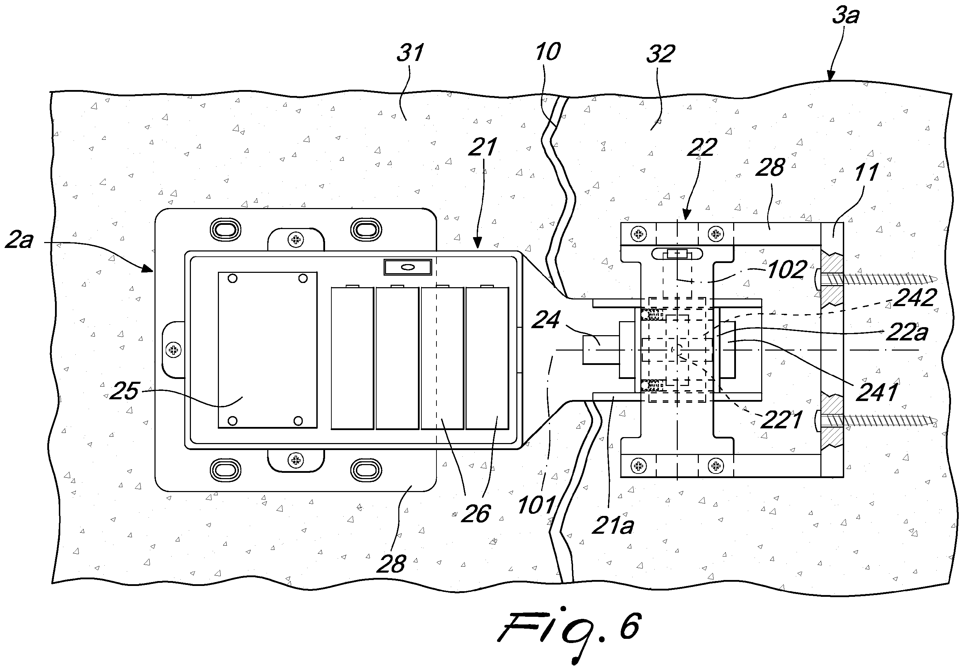

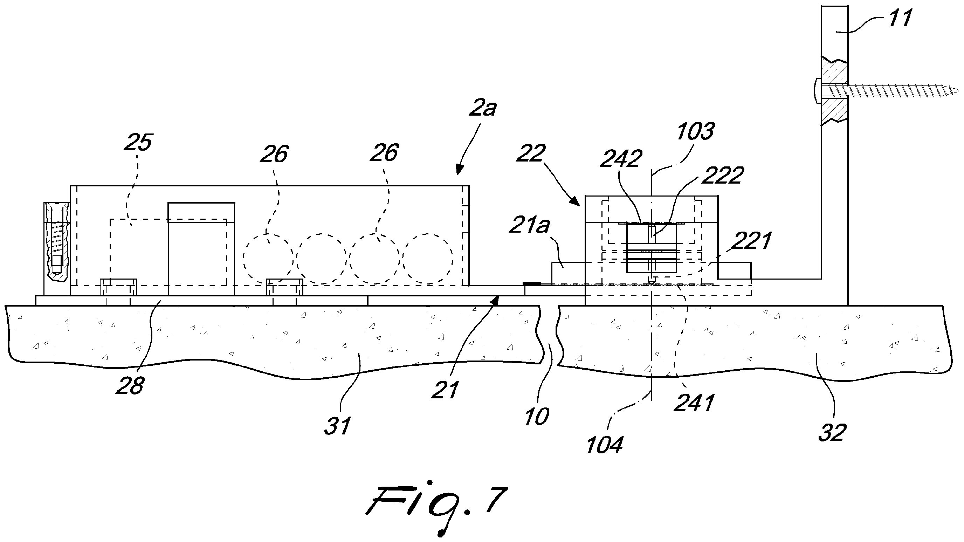

Figures 6 and 7 illustrate a second embodiment of the apparatus according to the invention, in which the second fixed element 22 of the structure 2a is fixed to a zone 32 of the structure 3a, at right angles to the zone 31 of the structure 3a, by means of a conveniently shaped connecting bracket 11.

The operation of the monitoring system according the invention is as follows.

The relative displacement of the zones 31 and 32 of a structure 3a affected by a crack 10, which occurs on the plane of said structure, entails a relative displacement, on the plane, also of the two fixed elements 21 and 22 of the measuring apparatus 2a, which are integrally connected respectively to the movable zones 31 and 32.

This relative displacement on the plane determines a sliding of the slider 221 with respect to the linear potentiometric membrane 241 that is substantially equal to the displacement between the zones 31 and 32 in a direction substantially at right angles to the crack 10 and optionally a sliding of the slider 222 with respect to the linear potentiometric membrane 242 that is substantially equal to the displacement between the zones 31 and 32 in a direction which is substantially parallel to the crack 10.

These displacements of the sliders with respect to the corresponding membranes entail modifications of the electrical contacts, particularly variations in impedance, that are proportional to the extent of the displacement itself.

These displacement values are acquired and transmitted, for example by means for wireless communication via a ZigBee transmission protocol, to a control server 4, from which it is possible to manage the monitoring system in order to modify the data acquisition protocol, store the data and download them later, transmit the data to a website to be browsed remotely, and optionally send warning messages in case of excessive displacements or malfunction.

The monitoring system thus conceived is susceptible of numerous modifications and variations, all of which are within the scope of the inventive concept; all the details may furthermore be replaced with other technically equivalent elements.

It is in fact possible to arrange an element for detecting rotation about the pivoting axis by associating it with a slider for detecting the rotation.

In practice, the materials used, as well as the dimensions, may be any according to the requirements and the state of the art.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A monitoring system (1) for damage to structures and buildings, comprising at least one apparatus (2a, 2b, 2c) for measuring cracks (10) of a structure (3a, 3b, 3f), said apparatus (2a) comprising a first fixed element (21), which is integral with a structure at a first zone (31) of the crack (10), and a second fixed element (22), which is integral with said structure (3a) at a second zone (32) of the crack (10), which is opposite to said first zone (31), said first fixed element (21) having a portion (23) that is adapted to engage said second fixed element (22) so as to straddle the crack (10), **characterized in that** said apparatus (2a, 2b, 2c) comprises a first detection element for detecting a relative displacement between said first zone (31) and said second zone (32) of the crack (10) along a first detection direction (101) which operates between a first abutment region (21a), defined on said first fixed element (21), and a second abutment region (221) rotatably supported about a first pivoting axis (103) by said second fixed element (22), said apparatus (2a) furthermore comprising a second detection element for detecting a relative displacement between said first zone (31) and said second zone (32) of the crack (10) along a second detection direction (102), which is substantially perpendicular to said first detection direction (101), said second detection element operating between a third abutment region (22a), defined on said second fixed element (2), and a fourth abutment region (222) rotatably supported about a second pivoting axis (104) parallel to said first pivoting axis (103) by said first fixed element (21).

2. The monitoring system (1) according to claim 1, **characterized in that** said first detection element comprises a first linear potentiometric membrane (241) which is supported by said first fixed element (21) and cooperates with a respective first slider (221) which defines said second abutment region.

3. The monitoring system (1) according to one or more of the preceding claims, **characterized in that** said second detection element comprises a second linear potentiometric membrane (242) which is supported by said second fixed element (22) and is arranged at right angles to said first linear potentiometric membrane (241), said second linear potentiometric membrane (242) cooperating with a respective second slider (222) which defines said fourth abutment region.

4. The monitoring system (1) according to one or more of the preceding claims, **characterized in that** said slider (221, 222) is in electrical and/or mechanical sliding contact with the respective linear potentiometric membrane (241, 242).

5. The monitoring system (1) according to one or more of the preceding claims, **characterized in that** said first slider (221) is rotatably supported, about a first pivoting axis (103) substantially perpendicular to the plane of arrangement of said first potentiometric membrane (241), by said second fixed element and is guided slidingly along a first sliding guide (21a), which is defined on said first fixed element (21) and is substantially parallel to said first detection direction (101).

6. The monitoring system (1) according to one or more of the preceding claims, **characterized in that** said second slider (222) is rotatably supported, about a second pivoting axis (104) substantially parallel to said first pivoting axis (103), by said first fixed element (21) and is guided slidingly along a second sliding guide (22a), which is defined on said second fixed element (22) and is substantially parallel to said second detection direction (102).

7. The monitoring system (1) according to one or more of the preceding claims, **characterized in that** said first linear potentiometric membrane (241) is partially superimposed on said second linear potentiometric membrane (242) and **in that** said first pivoting axis (103) coincides with said second pivoting axis (104).

8. The monitoring system (1) according to claim 1, **characterized in that** said first and second fixed elements (21, 22) comprise plates (28) for fixing to the structure (2a).

9. The monitoring system (1) according to claim 1, **characterized in that** said apparatus comprises a connecting bracket for fixing one of said first or second fixed elements (21, 22) on a plane that is perpendicular to the plane where the other fixed element (22, 21) is fixed.

10. The monitoring system (1) according to claim 1, **characterized in that** it comprises means for communicating with a control server (4).

11. The monitoring system (1) according to claim 1, **characterized in that** it comprises a user interface (6) of the touch-screen type.

12. The monitoring system (1) according to claim 1, **characterized in that** it comprises means for programming data reading.

13. The monitoring system (1) according to claim 1, **characterized in that** it is provided with data storage means for deferred download.

14. The monitoring system (1) according to claim 1, **characterized in that** it comprises means (8) for transmitting data to a Web site.

## Patentansprüche

1. Ein Überwachungssystem (1) für Schäden an Strukturen und Gebäuden, das mindestens eine Vorrichtung (2a, 2b, 2c) zur Messung von Rissen (10) an einer Struktur (3a, 3b, 3f) umfasst, wobei die Vorrichtung (2a) ein erstes festes Element (21) umfasst, das in einer ersten Zone (31) des Risses (10) integral mit einer Struktur ist, und ein zweites festes Element (22), das integral mit der Struktur (3a) in einer zweiten Zone (32) des Risses (10) ist, die der ersten Zone (31) gegenüberliegt, wobei das erste feste Element (21) einen Abschnitt (23) hat, der ausgebildet ist, um das zweite feste Element (22) zu halten, um so den Riss (10) zu überspannen; **dadurch gekennzeichnet, dass** die Vorrichtung (2a, 2b, 2c) ein erstes Erfassungselement zum Erfassen einer Relativverschiebung zwischen der ersten Zone (31) und der zweiten Zone (32) des Risses (10) entlang einer ersten Erfassungsrichtung (101) umfasst, das zwischen einem ersten Anschlagbereich (21a), das an dem ersten festen Element (21) bestimmt ist, und einem zweiten Anschlagbereich (221), durch das zweite feste Element (22) drehbar um eine erste Schwenkachse (103) gelagert ist, arbeitet; wobei die Vorrichtung (2a) weiter ein zweites Erfassungselement zum Erfassen einer Relativverschiebung zwischen der ersten Zone (31) und der zweiten Zone (32) des Risses (10) entlang einer zweiten Erfassungsrichtung (102) umfasst, die im Wesentlichen senkrecht zu der ersten Erfassungsrichtung (101) ist; wobei das zweite Erfassungselement zwischen einem dritten Anschlagbereich (22a), der an dem zweiten festen Element (2) bestimmt ist, und einem vierten Anschlagbereich (222) arbeitet, der durch das erste feste Element (21) drehbar um eine zweite Schwenkachse (104) gelagert ist, die parallel zu der ersten Schwenkachse (103) ist.

2. Das Überwachungssystem (1) gemäß Anspruch 1, **dadurch gekennzeichnet, dass** das erste Erfassungselement eine erste linear potentiometrische Membran (241) umfasst, die von dem ersten festen Element (21) getragen wird und mit einem dazugehörigen ersten Schieber (221) zusammenwirkt, der den zweiten Anschlagbereich bestimmt.

3. Das Überwachungssystem (1) gemäß einem oder mehreren der obigen Ansprüche, **dadurch gekennzeichnet, dass** das zweite Erfassungselement eine zweite linear potentiometrische Membran (242) umfasst, die von dem zweiten festen Element (22) getragen wird und in rechten Winkeln zu der ersten linear potentiometrischen Membran (241) angeordnet ist, wobei die zweite linear potentiometrische Membran (242) mit einem dazugehörigen zweiten Schieber (222) zusammenwirkt, der den vierten Anschlagbereich bestimmt.

4. Das Überwachungssystem (1) gemäß einem oder mehreren der obigen Ansprüche, **dadurch gekennzeichnet, dass** der Schieber (221, 222) in elektrischem und/oder mechanischem Gleitkontakt mit der entsprechenden linear potentiometrischen Membran (241, 242) ist.

5. Das Überwachungssystem (1) gemäß einem oder mehreren der obigen Ansprüche, **dadurch gekennzeichnet, dass** der erste Schieber (221) um eine erste Schwenkachse (103), die im Wesentlichen senkrecht zur Anordnungsebene der ersten potentiometrischen Membran (241) ist, drehbar durch das zweite feste Element gelagert ist und verschiebbar entlang einer ersten Gleitführung (21a) geführt wird, die auf dem ersten festen Element (21) bestimmt und im Wesentlichen parallel zu der ersten Erfassungsrichtung (101) ist.

6. Das Überwachungssystem (1) gemäß einem oder mehreren der obigen Ansprüche, **dadurch gekennzeichnet, dass** der zweite Schieber (222) um eine zweite Schwenkachse (104), die im Wesentlichen parallel zur ersten Schwenkachse (103) ist, drehbar durch das erste feste Element (21) gelagert ist und verschiebbar entlang einer zweiten Gleitführung (22a) geführt wird, die auf dem zweiten festen Element (22) bestimmt und im Wesentlichen parallel zu der zweiten Erfassungsrichtung (102) ist.

7. Das Überwachungssystem (1) gemäß einem oder mehreren der obigen Ansprüche, **dadurch gekennzeichnet, dass** die erste linear potentiometrische Membran (241) teilweise über die zweite linear potentiometrische Membran (242) gelegt ist, und dadurch, dass die erste Schwenkachse (103) mit der zweiten Schwenkachse (104) zusammenfällt.

8. Das Überwachungssystem (1) gemäß Anspruch 1, **dadurch gekennzeichnet, dass** die ersten und zweiten festen Elemente (21, 22) Platten (28) für die Befestigung an der Struktur (2a) umfassen.

9. Das Überwachungssystem (1) gemäß Anspruch 1, **dadurch gekennzeichnet, dass** die Vorrichtung einen Verbindungsträger zur Befestigung entweder des ersten oder des zweiten festen Elements (21, 22) auf einer Ebene umfasst, die senkrecht zu der Ebene ist, auf welcher das andere feste Element (22, 21) befestigt ist.

10. Das Überwachungssystem (1) gemäß Anspruch 1, **dadurch gekennzeichnet, dass** es Mittel für die Kommunikation mit einem Steuerungsserver (4) umfasst.

11. Das Überwachungssystem (1) gemäß Anspruch 1, **dadurch gekennzeichnet, dass** es eine Benutzerschnittstelle (6) vom Typ eines Touchscreens umfasst.

12. Das Überwachungssystem (1) gemäß Anspruch 1, **dadurch gekennzeichnet, dass** es Mittel zum Programmieren einer Datenauslesung umfasst.

13. Das Überwachungssystem (1) gemäß Anspruch 1, **dadurch gekennzeichnet, dass** es mit Datenspeicherungsmitteln für verzögerten Download ausgestattet ist.

14. Das Überwachungssystem (1) gemäß Anspruch 1, **dadurch gekennzeichnet, dass** es Mittel (8) für die Übertragung von Daten an eine Webseite umfasst.

## Revendications

1. Système de surveillance (1) pour les dommages causés aux structures et aux bâtiments, comprenant au moins un appareil (2a, 2b, 2c) pour mesurer les fissures (10) d'une structure (3a, 3b, 3f), ledit appareil (2a) comprenant un premier élément fixe (21) qui est solidaire avec une structure au niveau d'une première zone (31) de la fissure (10), et un second élément fixe (22) qui est solidaire avec ladite structure (3a) au niveau d'une seconde zone (32) de la fissure (10), qui est opposée à ladite première zone (31), ledit premier élément fixe (21) ayant une partie (23) qui est adaptée pour mettre en prise ledit second élément fixe (22) afin d'être à cheval sur la fissure (10), **caractérisé en ce que** ledit appareil (2a, 2b, 2c) comprend un premier élément de détection pour détecter un déplacement relatif entre ladite première zone (31) et ladite seconde zone (32) de la fissure (10) le long d'une première direction de détection (101) qui fonctionne entre une première région de butée (21a) définie sur ledit premier élément fixe (21) et une deuxième région de butée (221) supportée, en rotation, autour d'un premier axe de pivotement (103) par ledit second élément fixe (22), ledit appareil (2a) comprenant en outre un second élément de détection pour détecter un déplacement relatif entre ladite première zone (31) et ladite seconde zone (32) de la fissure (10) le long d'une seconde direction de détection (102), qui est sensiblement perpendiculaire à ladite première direction de détection (101), et ledit second élément de détection fonctionnant entre une troisième région de butée (22a) définie sur ledit second élément fixe (2) et une quatrième région de butée (222) supportée, en rotation, autour d'un second axe de pivotement (104) parallèle audit premier axe de pivotement (103) par ledit élément fixe (21).

2. Système de surveillance (1) selon la revendication 1, **caractérisé en ce que** ledit premier élément de détection comprend une première membrane potentiométrique linéaire (241) qui est supportée par ledit premier élément fixe (21) et coopère avec une première glissière (221) respective qui définit ladite deuxième région de butée.

3. Système de surveillance (1) selon une ou plusieurs des revendications précédentes, **caractérisé en ce que** ledit second élément de détection comprend une seconde membrane potentiométrique linéaire (242) qui est supportée par ledit second élément fixe (22) et est agencée à angle droit par rapport à ladite première membrane potentiométrique linéaire (241), ladite seconde membrane potentiométrique linéaire (242), coopérant avec une seconde glissière (222) respective qui définit ladite quatrième région de butée.

4. Système de surveillance (1) selon une ou plusieurs des revendications précédentes, **caractérisé en ce que** ladite glissière (221, 222) est en contact coulissant électrique et/ou mécanique avec la membrane potentiométrique linéaire (241, 242) respective.

5. Système de surveillance (1) selon une ou plusieurs des revendications précédentes, **caractérisé en ce que** ladite première glissière (221) est supportée, en rotation, autour d'un premier axe de pivotement (103) sensiblement perpendiculaire au plan d'agencement de ladite première membrane potentiométrique (241), par ledit second élément fixe et est guidé, de manière coulissante le long d'un premier guide de coulissement (21a) qui est défini sur ledit premier élément fixe (21) et est sensiblement parallèle à ladite première direction de détection (101).

6. Système de surveillance (1) selon une ou plusieurs des revendications précédentes, **caractérisé en ce que** ladite seconde glissière (222) est supportée, en rotation, autour d'un second axe de pivotement (104) sensiblement parallèle audit premier axe de pivotement (103), par ledit premier élément fixe (21) et est guidée de manière coulissante le long d'un second guide de coulissement (22a), qui est défini sur ledit second élément fixe (22) et est sensiblement parallèle à ladite seconde direction de détection (102).

7. Système de surveillance (1) selon une ou plusieurs des revendications précédentes, **caractérisé en ce que** ladite première membrane potentiométrique linéaire (241) est partiellement superposée sur ladite seconde membrane potentiométrique linéaire (242) et **en ce que** ledit premier axe de pivotement (103) coïncide avec ledit second axe de pivotement (104).

8. Système de surveillance (1) selon la revendication 1, **caractérisé en ce que** lesdits premier et second éléments fixes (21, 22) comprennent des plaques (28) pour se fixer à la structure (2a).

9. Système de surveillance (1) selon la revendication 1, **caractérisé en ce que** ledit appareil comprend un support de raccordement pour fixer l'un desdits premier ou second éléments fixes (21, 22) sur un plan qui est perpendiculaire au plan où est fixé l'autre élément fixe (22, 21).

10. Système de surveillance (1) selon la revendication 1, **caractérisé en ce qu'**il comprend des moyens pour communiquer avec un serveur de commande (4).

11. Système de surveillance (1) selon la revendication 1, **caractérisé en ce qu'**il comprend une interface utilisateur (6) du type écran tactile.

12. Système de surveillance (1) selon la revendication 1, **caractérisé en ce qu'**il comprend des moyens pour la lecture des données de programmation.

13. Système de surveillance (1) selon la revendication 1, **caractérisé en ce qu'**il est prévu avec des moyens de stockage de données pour un téléchargement différé.

14. Système de surveillance (1) selon la revendication 1, **caractérisé en ce qu'**il comprend des moyens (8) pour transmettre des données à un site Internet.
